# EUROPÄISCHE PATENTANMELDUNG

(11) **EP 1 099 589 A1**
(43) Veröffentlichungstag der Anmeldung: **16.05.2001**
(21) Anmeldenummer: 99122310.8
(22) Anmeldetag: 09.11.1999
(51) Int. Cl.: B60L 5/00

(54) **Selbstfahrender Wagen und System mit derartigem selbstfahrenden Wagen**

(71) Anmelder: Gehwolf, Friedrich, 83022 Rosenheim (DE); Kurz, Josef, 83024 Rosenheim (DE)
(72) Erfinder: Kurz, Josef, 80324 Rosenheim (DE); Schuster, Heinz-Peter, 83064 Raubling (DE)
(74) Vertreter: Grünecker, Kinkeldey, Stockmair & Schwanhäusser Anwaltssozietät

(57) **Zusammenfassung**

Die Erfindung betrifft einen selbstfahrenden Wagen mit einer Lenkeinrichtung, und einem Magnetkopf, der um eine vertikal durch den Wagen verlaufende Achse drehbar gelagert ist, und zur magnetischen Kopplung an eine Leitschiene zur Führung des selbstfahrenden Wagens ausgebildet ist, derart daß der Magnetkopf bei Betrieb des selbstfahrenden Wagens der Leitschiene folgt. Die Erfindung zeichnet sich dadurch aus,
daß der Magnetkopf in im wesentlichen vertikaler Richtung bewegbar an dem selbstfahrenden Wagen angeordnet ist, und daß der Magnetkopf eine Einrichtung aufweist, die den Magnetkopf bei Betrieb des selbstfahrenden Wagens in konstantem Abstand zur Leitschiene hält. Weiterhin betrifft die Erfindung ein System mit selbstfahrenden Wagen. Dieses System zeichnet sich aus durch wenigstens selbstfahrenden Wagen der oben bezeichneten Art, und eine Leitschiene zur Führung des selbstfahrenden Wagens, wobei der Wagen im Betrieb mit der Leitschiene magnetisch so gekoppelt ist, daß eine durch die Leitschiene verursachte Drehung des Magnetkopfs um die vertikale Achse eine der Leitlinie entsprechende Steuerung der Lenkeinrichtung bewirkt.

## Beschreibung

### Gebiet der Erfindung

Die vorliegende Erfindung betrifft einen selbstfahrenden Wagen mit einer Lenkeinrichtung, und einem Magnetkopf, der um eine vertikal durch den Wagen verlaufende Achse drehbar gelagert ist, und zur magnetischen Kopplung an eine Leitschiene zur Führung des selbstfahrenden Wagens ausgebildet ist, derart daß der Magnetkopf bei Betrieb des selbstfahrenden Wagens der Leitschiene folgt.

Weiterhin betrifft die vorliegende Erfindung ein System mit einem selbstfahrenden Wagen und einer Leitschiene, in welchem beim Betrieb des Wagens der Magnetkopf des Wagens magnetisch an die Leitschiene gekoppelt ist.

### Stand der Technik

Ein selbstfahrender Wagen und ein System mit einem selbstfahrenden Wagen sind aus der DE 41 19 245 C2 bekannt.

Derartige Wagen können in solchen Systemen als Transportwagen, Staplerwagen, Roboterwagen oder dergleichen vorgesehen werden.

Der in dieser Druckschrift gezeigte Wagen umfaßt neben den zuvor beschriebenen Merkmalen eine Sensoreinrichtung und eine Steuereinrichtung zur Steuerung der Lenkeinrichtung. Die Sensoreinrichtung erfaßt hierbei die Drehwinkel des Magnetkopfs um die vertikal durch den Wagen verlaufende Achse und gibt diese an eine Steuereinrichtung. Die Steuereinrichtung erzeugt daraufhin ein Signal, durch daß der Wagen derart gelenkt wird, daß er der Leitschiene folgt. Die Sensoreinrichtung und die Steuereinrichtung (einschließlich der Lenkeinrichtung) bilden hierbei einen Regelkreis. Das in dieser Druckschrift gezeigte System umfaßt einen derartigen Wagen und eine Leitschiene.

Ein weiterer selbstfahrender Wagen und ein System mit einem selbstfahrenden Wagen sind in der europäischen Patentanmeldung 99 108 761 bekannt. Gegenüber dem zuvor beschriebenen Wagen und System ist der drehbar gelagerte Magnetkopf mit der Lenkeinrichtung mechanisch so gekoppelt, daß eine durch eine Leitschiene hervorgerufene Drehung des Magnetkopfs um die vertikale Achse eine dem Verlauf der Leitschiene entsprechende Steuerung der Lenkeinrichtung bewirkt. Hierdurch kann jede durch eine Leitschiene bedingte Drehung des Magnetkopfs auf mechanischem Weg direkt auf die Lenkeinrichtung übertragen werden. Somit entfällt gegenüber der zuvor beschriebenen Ausführung die Sensoreinrichtung zur Erfassung der Drehung und die Steuereinrichtung zur Erzeugung eines entsprechenden Signals.

In den beiden oben beschriebenen Wagen, die schematisch in Figur 9 dargestellt und in dieser Figur mit dem Bezugszeichen 100 versehen sind, hat der Magnetkopf 102 einen festen Abstand D zu einem völlig ebenen Untergrund 103.

Ein Nachteil des Wagens 100 und der dazugehörige Systeme is es allerdings, daß bei Bodenunebenheiten, insbesondere bei einer Vertiefung 104, wie sie in Figur 9 dargestellt ist, der Abstand zwischen dem Magnetkopf 102 und einer Leitschiene 105 so groß wird, daß die abstandsabhängigen magnetischen Kräfte nicht mehr ausreichen, um die magnetische Kopplung zwischen Magnetkopf und Leitschiene aufrecht zu erhalten. Anders ausgedrückt, der Magnetkopf kann nicht mehr entlang der Leitschiene geführt werden. Dies führt wiederum dazu, daß sich der Wagen von seinem vorgegebenen Weg löst.

### Beschreibung der Erfindung

Angesichts dieser Nachteils der verschieden Wagen und Systems gemäß dem Stand der Technik liegt der Erfindung die Aufgabe zugrunde, den bekannten Wagen und das bekannte System zu verbessem.

Insbesondere soll sichergestellt werden, daß die magnetische Kopplung zwischen Magnetkopf und Leitschiene auch bei Bodenunebenheiten aufrecht erhalten bleibt.

Diese Aufgabe wird durch einen Wagen der eingangs genannten Art gelöst, der sich dadurch auszeichnet, daß der Magnetkopf in im wesentlichen vertikaler Richtung bewegbar an dem selbstfahrenden Wagen angeordnet ist, und daß der Magnetkopf eine Einrichtung aufweist, die den Magnetkopf bei Betrieb des selbstfahrenden Wagens in konstantem Abstand zur Leitschiene hält und als Konsequenz der Magnetkopf der Leitschiene folgt.

Dadurch daß erfindungsgemäß einerseits gewährleistet ist, daß der Magnetkopf in vertikaler Richtung beziehungsweise auf einem Bogen nach oben und unten bewegbar ist, und andererseits eine Einrichtung vorgesehen ist, durch die der Magnetkopf in konstantem Abstand zur Leitschiene gehalten wird, kann sichergestellt werden, daß immer die erforderliche magnetische Kopplung zwischen Magnetkopf und Leitschiene gegeben ist.

Die Erfindung kann dahingehend vorteilhaft weitergebildet werden, daß der Magnetkopf drehbar an einem ersten Ende eines Auslegers vorgesehen ist, und das andere Ende des Auslegers drehbar um die vertikale Achse gelagert und mechanisch mit der Lenkeinrichtung gekoppelt ist.

Dadurch daß der Magnetkopf auf einem Ausleger vorgesehen ist, kann eine Bewegung des Magnetkopfs unter Einsatz einer durch die Abmessungen des Auslegers bestimmten Hebelkraft auf die Lenkeinrichtung übertragen werden. Hierdurch können, bei gleicher magnetischer Kopplung zwischen Magnetkopf und Leitschiene die Lenkkräfte erhöht werden, was, beispielsweise im Fall eines Transportwagens eine erhöhte Beladung des Wagens ermöglicht. Für gleiche Lenkkräfte bedeutet diese Weiterbildung, eine geringere Anforderung an die Stärke der magnetischen Kopplung zwischen Magnetkopf und Leitschiene. In diesem Fall kann demnach ein schwächere Kopplung vorgesehen werden, die insgesamt weniger konstruktionellen Aufwand bedeutet und damit kostengünstiger hergestellt werden kann.

Entsprechend einer ersten Alternative kann die Einrichtung in Form wenigstens eines um eine senkrecht zur Längsrichtung des Magnetkopfs verlaufende Achse drehbar gelagerten Rads oder einer um eine senkrecht zur Längsrichtung des Magnetkopfs verlaufende Achse drehbar gelagerten Walze oder Rolle ausgebildet sein.

Vorteilhafterweise kann hierbei die Einrichtung in Form von zwei Rädern vorgesehen sein. Hierdurch wird auf besonders einfache Weise ein konstanter Abstand zwischen Magnetkopf und Leitschiene gewährleistet.

Beide Ausführungen können darüber hinaus dahingehend weitergebildet werden, daß die senkrecht zur Längsrichtung des Magnetkopfs verlaufende Achse in Fahrtrichtung hinter der vertikalen Drehachse des Magnetkopfs vorgesehen ist. Der Abstand der beiden Achsen voneinander kann so bemessen werden, daß bezüglich einer minimal erforderlichen Auslenkkraft des Magnetkopfs aus seiner Laufposition und einer maximalen Laufruhe optimiert wird.

Entsprechend einer zweiten Alternative kann die Einrichtung zur Ausbildung eines Luftkissens zwischen dem Magnetkopf und der Leitschiene ausgebildet sein.

Gemäß einer dritten Alternative kann die Einrichtung eine Sensoreinrichtung zum wiederholten Messen des Abstandes zwischen Magnetkopf und Leitschiene sowie eine Stelleinrichtung aufweisen, die den Magnetkopf auf Basis der Messungen in konstantem Abstand zur Leitschiene hält.

Auch die beiden zuletzt genannten Alternativen können vorteilhafterweise an einem Ausleger, wie er oben bereits beschrieben worden ist, vorgesehen werden.

Entsprechend einer vorteilhaften Weiterbildung aller zuvor beschriebenen Ausführungsformen kann die Lenkeinrichtung eine Vorderradlenkeinheit und/oder eine Hinterradlenkeinheit aufweisen, wobei der drehbar gelagerte Magnetkopf mit der Vorderradlenkeinheit und/oder der Hinterradlenkeinheit mechanisch gekoppelt ist.

Durch diese Maßnahmen kann die Lenkeinrichtung in Abhängigkeit von den Anforderungen des betreffenden Einsatzgebietes optimiert werden.

Die Kombination aus Vorderradlenkeinheit und Hinterradlenkeinheit eignet sich hierbei insbesondere für Lagertransportsystem, da durch eine derartige Lenkeinrichtung sehr kleine Kurvenradien gefahren werden können. Dies führt insbesondere dazu, daß sich ein mit derartigen Wagen betriebenes System durch verringerten Platzbedarf auszeichnet.

Gemäß einer vorteilhaften Weiterbildung der zuvor beschriebenen Ausführung können die Vorderradlenkeinheit und/oder die Hinterradlenkeinheit durch jeweils eine Lenkstange mit dem drehbar gelagerten Magnetkopf gekoppelt sein.

Hierdurch kann die mechanische Kopplung zwischen Magnetkopf und Lenkeinrichtung auf einfache Weise realisiert werden. Diese Weiterbildung zeichnet sich demnach durch geringe Herstellungskosten aus.

Falls sowohl eine Vorderradlenkeinheit als auch eine Hinterradlenkeinheit eingesetzt wird, können diese mittels einer Koppelstange mit dem drehbar gelagerten Magnetkopf mechanisch verbunden werden. Diese Koppelstange kann einstückig oder mehrstückig ausgebildet sein. Hierdurch können beide Lenkeinheiten auf besonders einfache Weise miteinander gekoppelt werden, was wiederum zu verringerten Herstellungskosten des erfindungsgemäßen Wagens führt.

In der Ausführung, in der sowohl eine Vorderradlenkeinheit als auch eine Hinterradlenkeinheit vorgesehen ist, kann der Ausleger über eine Welle mit der Koppelstange verbunden sein. Dies ermöglicht eine effiziente Übertragung von Bewegungen des Magnetkopfs auf die Lenkeinrichtung.

Gemäß einer bevorzugten Weiterbildung der zuvor beschriebenen Ausführungen können die Vorderradlenkeinheit und/oder die Hinterradlenkeinheit umfassen: einen zweischenkligen Lenkstockhebel, der drehbar mit dem Wagen verbunden ist, wobei das Ende des einen Schenkels drehbar mit dem Lenkhebel verbunden ist, eine erste Lenkschubstange, deren eines Ende mit dem Ende des anderen Schenkels des Lenkstockhebels drehbar verbunden ist, einen Zwischenhebel, dessen eines Ende drehbar mit dem Wagen verbunden ist, eine zweite Lenkschubstange, deren eines Ende mit dem Zwischenhebel drehbar verbunden ist, eine Spurstange, deren eines Ende drehbar mit dem einen Ende der ersten Lenkschubstange und deren anderes Ende drehbar mit dem einen Ende der zweiten Lenkschubstange verbunden ist, einen ersten Radlenkhebel, dessen eines Ende mit dem anderen Ende der ersten Lenkschubstange drehbar verbunden ist und dessen anderes Ende mit einem ersten um eine vertikale Achse drehbar an dem Wagen befestigtem Rad zur Drehung desselben um diese Achse vorgesehen ist, und einen zweiten Radlenkhebel, dessen eines Ende mit dem anderen Ende der zweiten Lenkschubstange drehbar verbunden ist und dessen anderes Ende mit einem zweiten um eine vertikale Achse drehbar an dem Wagen befestigtem Rad zur Drehung desselben um diese Achse vorgesehen ist.

Durch diese vorteilhafte Weiterbildung kann eine mechanisch sehr einfache, aber dennoch sehr effiziente Lenkeinrichtung geschaffen werden. Diese Lenkeinrichtung zeichnet sich einerseits durch geringe Herstellungskosten aus. Andererseits gewährleistet diese Lenkeinrichtung eine der magnetischen Kopplung zwischen Magnetkopf und Schiene angepaßte Kraftübertragung der Bewegung des Magnetkopfs auf die Lenkeinrichtung.

Falls beispielsweise zur Erhöhung der Beladungsgrenze eines Wagens eine erhöhte Lenkkraft erforderlich ist, kann gemäß einer anderen vorteilhaften Weiterbildung nach dem Magnetkopf eine Kraftverstärkungseinrichtung beispielsweise in Form eines Servomotors, vorgesehen werden.

Der Magnetkopf des zuvor beschriebenen Wagens kann wenigstens einen Permanentmagneten oder wenigstens einen Elektromagneten umfassen. Ein Permanentmagnet kann vorteilhafterweise eingesetzt werden, wenn auf geringe Herstellungskosten des Wagens zu achten ist. Ein Elektromagnet erfordert zwar einen höheren konstruktionellen Aufwand, führt hierfür allerdings zu einer besseren Handhabbarkeit der Wagen. Durch Ausschalten des Elektromagneten kann der Wagen unabhängig von der Leitschiene bewegt werden. Dies ist insbesondere von Vorteil, wenn der Wagen über eine Weiche in einem Leitschienensystem fahren soll, oder ganz aus dem Leitschienensystem genommen werden soll.

Gemäß einer bevorzugten Weiterbildung umfaßt der Magnetkopf einen T-förmigen, U-förmigen oder W-förmigen Querschnitt senkrecht zur Längsrichtung des Magnetkopfs aufweist. Hierbei können vorteilhafterweise der bzw. die Schenkel der T-Form, U-Form oder W-Form durch wenigstens einen auf einer Polplatte vorgesehenen Stabmagneten ausgebildet sein.

Dadurch, daß Stabmagnete den oder die Schenkel der oben bezeichneten Formen bilden, können hohe Feldstärken, die eine hinreichend starke magnetische Kopplung gewährleisten, erzielt werden. Die Verwendung einer Polplatte, beispielsweise aus Weicheisen, auf der diese Stabmagnete vorgesehen sind, bewirkt zusätzlich eine Verstärkung der magnetischen Kopplung.

Die obenstehende Aufgabe wird außerdem gelöst durch ein System mit wenigstens einem selbstfahrenden Wagen gemäß einer der zuvor beschriebenen Ausführungen, und einer Leitschiene zur Führung des selbstfahrenden Wagens, wobei der Wagen im Betrieb mit der Leitschiene magnetisch so gekoppelt ist, daß eine durch die Leitschiene verursachte Drehung des Magnetkopfs um die vertikale Achse eine der Leitlinie entsprechende Steuerung der Lenkeinrichtung bewirkt.

Durch Verwendung der zuvor beschriebenen Ausführungen des erfindungsgemäßen Wagen lassen sich in dem erfindungsgemäßen System alle bereits im Zusammenhang mit den Ausführungen des Wagens genannten Vorteile verwirklichen. Zur Vermeidung von Wiederholungen wird an dieser Stelle deshalb lediglich auf die oben stehende Diskussion der einzelnen Ausführungen verwiesen.

Gemäß einer Weiterbildung des erfindungsgemäßen Systems kann die Leitschiene im Boden versenkt vorgesehen werden und eine flache Oberseite aufweisen, die in der Ebene des Bodens liegt.

Hierdurch wird vermieden, daß der Betrieb des Systems durch Verschmutzung behindert wird. Da die Leitschienen bündig mit dem Boden vorgesehen sind, wird auf eine Verletzungsgefahr, beispielsweise durch Stolpern über Schienen, vermieden.

Gemäß einer anderen vorteilhaften Weiterbildung des Systems umfaßt die Leitschiene einen Permanentmagneten oder einen Elektromagneten, wobei die Polung des in Richtung des Wagens weisenden Abschnitts der Leitschiene und die Polung des in Richtung der Schiene weisenden Abschnitts des Magnetkopfs einander entgegengesetzte Polarität aufweisen. Hierdurch kann eine besonders starke magnetische Kopplung des Magnetkopfs an die Leitschiene verwirklicht werden. Diese Weiterbildung eignet sich insbesondere, wenn hohe Lenkkräfte, beispielsweise aufgrund sehr hohen Ladegewichts, erforderlich sind. Ein Elektromagnet erleichtert eine Steuerung der Wagen des Systems. Beispielsweise können durch Ein- und Ausschalten verschiedene Weichenstellungen in einem Leitschienensystem realisiert werden.

Alternativ hierzu kann die Leitschiene auch ein Reaktionseisen aufweisen. Hierdurch kann für viele Anwendungsfälle eine hinreichend starke magnetische Kopplung erzielt werden. Vorteil diese Alternative ist es, daß sie relativ einfach und kostengünstig implementiert werden kann.

Vorteilhafterweise kann die Leitschiene T-förmig, U-förmig oder W-förmig ausgebildet sein und so angeordnet werden, daß jeweils der bzw. die Schenkel der T-Form, der U-Form bzw. der W-Form in Richtung des Magnetkopfs zeigen. Dies führt, wie im Fall des Magnetkopfs, zur einfachen Ausbildung von hinreichend hohen Magnetfeldstärken.

Entsprechend einer anderen vorteilhaften Weiterbildung des Systems sind die Form des Magnetkopfs und die Form der Leitschiene aufeinander abgestimmt. Es können hierzu insbesondere die Breitenabmessungen des Schenkels bzw. der Schenkel des T-förmigen, U-förmigen oder W-förmigen Magnetkopfs den Breitenabmessungen des Schenkels bzw. der Schenkel der T-förmigen, U-förmigen oder W-förmigen Leitschiene entsprechen.

Hierdurch wird eine maximale Magnetfeldstärke, die zu einer starken Kopplung zwischen Magnetkopf und Leitschiene führt, ausgebildet.

Im folgenden werden bevorzugte Ausführungsformen der Erfindung unter Bezugnahme auf die beigefügte Zeichnung beschrieben. In der Zeichnung zeigen:
- Figur 1: eine schematische Ansicht einer ersten Ausführungsform der vorliegenden Erfindung zur Erläuterung des der Erfindung zugrunde liegenden Prinzipis,
- Figur 2: eine Seitenansicht eines Magnetkopf gemäß einer zweiten Ausführungsform der vorliegenden Erfindung,
- Figur 3: eine Seitenansicht eines selbstfahrenden Wagens gemäß der zweiten Ausführungsform der Erfindung,
- Figur 4: eine Ansicht des in Figur 3 dargestellten Wagens entlang der Linie III-III,
- Figur 5: eine Draufsicht auf die Lenkeinrichtung des selbstfahrenden Wagens aus Figur 3 und 4,
- Figur 6: eine Schrägansicht eines Magnetkopfs und einer Leitschiene in einer dritten Ausführungsform eines Systems gemäß der vorliegenden Erfindung,
- Figur 7: eine Schrägansicht eines Magnetkopfs und einer Leitschiene in einer vierten Ausführungsform eines Systems gemäß der vorliegenden Erfindung,
- Figur 8: eine Schrägansicht eines Magnetkopfs und einer Leitschiene in einer fünften Ausführungsform eines Systems gemäß der vorliegenden Erfindung, und
- Figur 9: eine Ansicht eines selbstfahrendenWagens gemäß dem Stand der Technik.

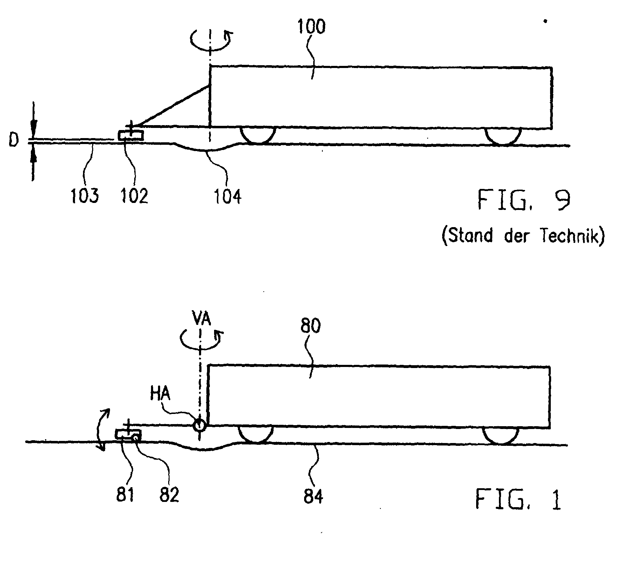

In Figur 1 ist eine erste Ausführungsform der vorliegenden Erfindung schematisch dargestellt. Diese erste Ausführungsform zeigt einen Wagen 80, der mit einem Magnetkopf 81 versehen ist. Der Magnetkopf 81 ist hierbei an dem Wagen 80 derart angebracht, daß er um eine vertikal verlaufende Achse VA drehbar ist.

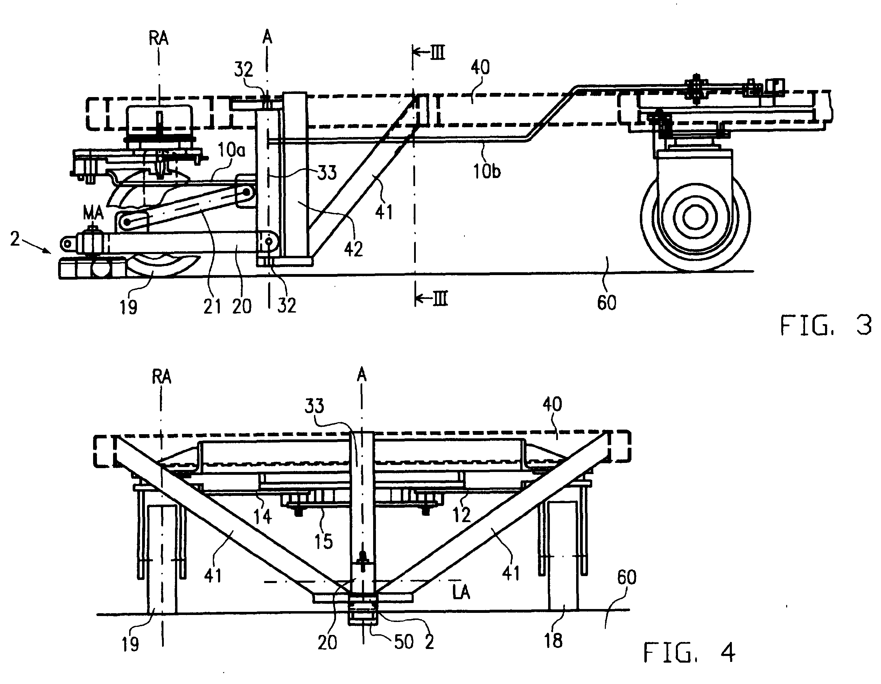

Hierdurch kann der Magnetkopf 81, wenn er magnetisch an eine Leitschiene 84 gekoppelt ist, dieser Leitschiene folgen und entsprechende Steuersignale an eine Steuereinrichtung des Wagens (nicht gezeigt) abgeben oder eine direkte Steuerung des Wagens, wie sie insbesondere im Zusammenhang mit den Figuren 3 bis 5 noch im Detail beschrieben wird, betätigen.

Darüber hinaus und im Gegensatz zum Stand der Technik, wie in Figur 9 dargestellt, ist der Magnetkopf auch um eine horizontale Achse HA, die senkrecht zur Längsachse des Wagens verläuft drehbar.

Weiterhin umfaßt der Magnetkopf 81 ein um eine horizontale Achse drehbares Rad 82. Das Rad 82 und die Tatsache, daß der durch sein Gewicht auf dem Boden aufliegende Magnetkopf um die Achse HA drehbar gelagert ist, stellen sicher, daß der Magnetkopf 81 beim Betrieb des Wagens 80 immer einen konstanten Abstand zur Leitschiene 84 aufweist. Selbst wenn eine Unebenheit im Boden oder Leitschiene vorliegt, kann der Magnetkopf der Leitschiene immer folgen, wobei der konstante Abstand zwischen Magnetkopf 81 und Leitschiene 84 immer sicherstellt, daß magnetische Kopplung zwischen Magnetkopf und Leitschiene immer beibehalten wird.

Gegenüber dem Stand der Technik wird somit vermieden, daß die magnetische Kopplung zwischen Magnetkopf und Leitschiene aufgebrochen wird, und der Wagen somit unkontrollierbar wird.

Dadurch daß der Magnetkopf in horizontaler Richtung drehbar gelagert ist, kann außerdem sichergestellt werden, daß bei Erhöhungen der Abstand zwischen Magnetkopf und Schiene konstant bleibt. Bei einem Wagen gemäß dem Stand der Technik, wie er in Figur 9 dargestellt ist, stellt eine Erhöhung zwar bezüglich der magnetischen Kopplung kein Problem dar, da die Kopplung durch Verringerung des Abstands sogar stärker, wird; wenn allerdings eine Erhöhung den Minimalabstand zwischen Magnetkopf und Leitschiene übersteigt, kann es zu einer Beschädigung des Magnetkopfs kommen. Erfindungsgemäß können solche Beschädigungen vermieden werden.

Als weitere Folge kann der Minimalabstand des Magnetkopfs gegenüber der Leitschiene, da er während des Betriebs auch im Fall von Erhöhungen konstant bleibt, demnach wesentlich kleiner gehalten werden.

Der erfindungsgemäße Effekt der Drehbewegung um die Achse HA kann auch durch eine Verschiebung des Magnetkopf in vertikaler Richtung erzielt werden. Demnach ist es auch möglich, den Magnetkopf vertikal verschiebbar an dem Wagen vorzusehen.

Der Magnetkopf 81 in Figur 1 ist an einem Ausleger angeordnet. Dieser Ausleger ist insbesondere vorteilhaft, wenn durch den Magnetkopf eine direkte Lenkung des Wagens, wie sie im Zusammenhang mit den Figuren 3 bis 5 beschrieben wird, betätigt werden soll.

Falls gemäß einer anderen nicht in den Zeichnungen dargestellten Ausführungsform, der Magnetkopf lediglich der Leitschiene folgen soll, um ein Steuersignal für eine Steuereinrichtung zu erzeugen, kann der Magnetkopf auch direkt an dem Wagen drehbar beziehungsweise verschiebbar angebracht werden.

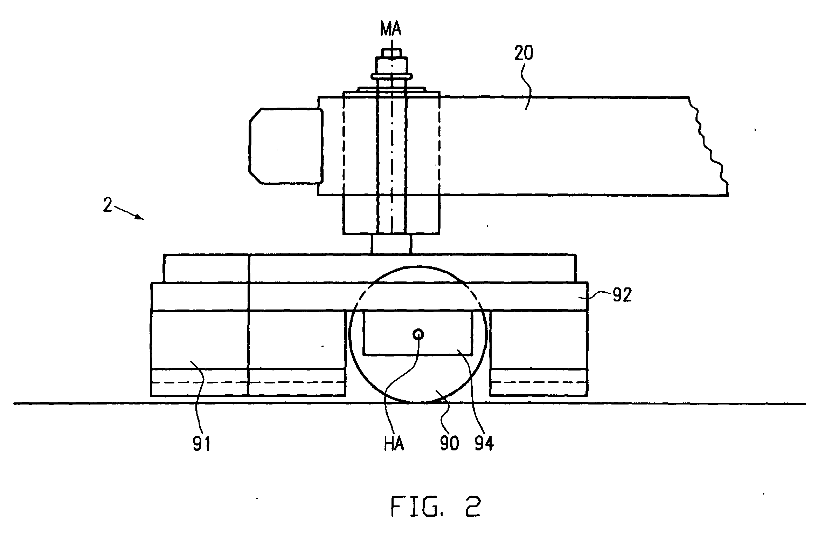

In Figur 2 ist eine weitere Ausführungsform eines Magnetkopfs im Detail dargestellt. Der Magnetkopf 2 gemäß dieser Figur umfaßt einen Trägerabschnitt 92, an dem zum einen die für die magnetische Kopplung erforderlichen Magnete 91 angebracht sind. Diese Magnete 91 sind in der gezeigten Ausführungsform in Form von Permanentmagneten vorgesehen. Zum anderen ist an dem Trägerabschnitt 92 auch eine Lagereinrichtung 94 für zwei Räder, von denen das sichtbare Rad das Bezugszeichen 90 trägt, vorgesehen. Beide Räder sind hierbei um die Achse HA drehbar und in Richtung der Achse HA voneinander beabstandet angeordnet.

Der Magnetkopf 2 ist weiterhin drehbar um eine Achse MA an einem Ausleger 20 vorgesehen. Hierbei liegt die Drehachse HA in Fahrtrichtung hinter der Drehachse MA. Je näher die Achsen beieinander liegen, um so geringer ist die Kraft, die auf das Räderpaar ausgeübt werden muß, um es aus der Laufrichtung zu drehen. Je weiter die Achsen voneinander entfernt sind, um so größer ist die Laufruhe des Räderpaars. Demgemäß ist der Abstand der beiden Achsen voneinander zweckmäßigerweise so einzustellen, daß das Nachfolgeverhalten des Magnetkopfs bezüglich der zur Drehung erforderlichen Kraft und der Laufruhe des Magnetkopf, die sich insbesondere bei einer direkten Lenkung, wie sie im Zusammenhang mit den Figuren 3 bis 5 noch beschrieben wird, auch auf die Laufruhe des Wagens insgesamt auswirkt, optimiert wird.

In den Figuren 3 bis 5 ist ein Wagen mit einem Magnetkopf gemäß Figur 2 und der bereits angesprochenen direkten Lenkung dargestellt.

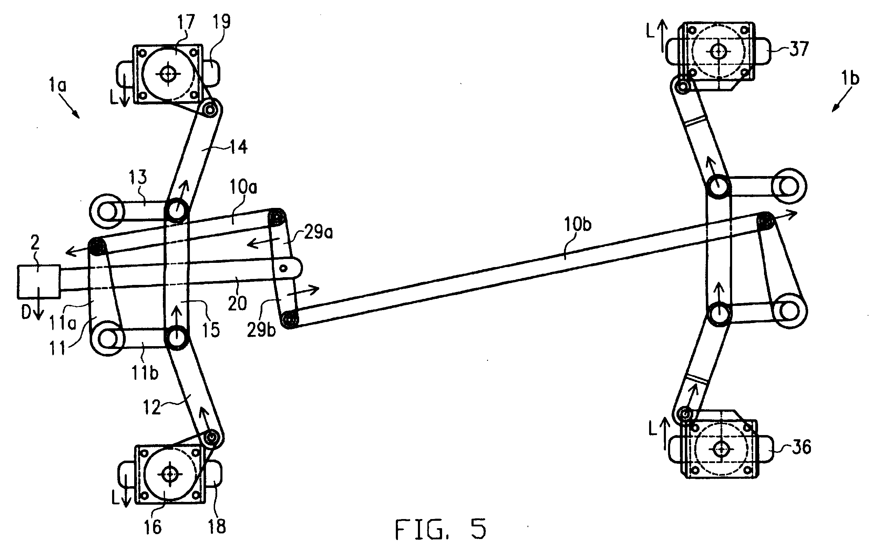

Figur 5 zeigt hierbei insbesondere eine Draufsicht auf die Lenkeinrichtung des erfindungsgemäßen Wagens. In Figur 3 ist eine Seitenansicht dieses Wagens dargestellt. In Figur 4 ist eine Ansicht entlang der Linie III-III in Figur 3 zu sehen.

Wie insbesondere aus Figur 3 ersichtlich, umfaßt der erfindungsgemäße Wagen einen Rahmen 40, an dem vier Räder 19 (siehe Figur 5) um eine Längsachse drehbar befestigt sind. In Figur 3 ist insbesondere das Rad 19 mit seiner vertikalen Drehachse RA dargestellt.

Der Rahmen 40 umfaßt weiterhin eine Haltevorrichtung 41 und 42 für eine drehbare Lagerung eines Magnetkopfs 2 um eine Achse A. Zur drehbaren Lagerung des Magnetkopfs 2 ist eine Welle 33 vorgesehen, die in zwei Lagereinrichtungen 32 drehbar gehaltert ist. An dieser Welle ist ein Ausleger 20 um eine in horizontaler Richtung verlaufende Achse LA (siehe insbesondere Figur 4) gelagert. An dem anderen Ende des Auslegers 20 ist der Magnetkopf 2 um eine vertikale Achse MA drehbar gelagert. In Bezug auf den Magnetkopf wird zur Vermeidung von Wiederholungen auf die Beschreibung von Figur 2 verwiesen.

An der Welle 33 sind zwei Koppelstangen 29a und 29b fest angebracht. An diesen Koppelstangen sind um eine Achse in vertikaler Richtung drehbar eine erste Lenkstange 10a und eine zweite Lenkstange 10b gelagert. Durch diese Lenkstangen werden, bei einer durch den Ausleger 20 bewirkten Drehung der Welle 33, eine Vorderradlenkeinheit 1a und eine Hinterradlenkeinheit 1b betätigt. Da die Vorderradlenkeinheit 1a und die Hinterradlenkeinheit 1b im vorliegenden Fall identisch zueinander aufgebaut sind, wird im folgenden nur die Vorderradlenkeinheit 1a im Detail beschrieben.

Die Vorderradlenkeinheit 1a umfaßt einen zweischenkeligen Lenkstockhebel 11, der um eine vertikale Achse drehbar fest mit dem Rahmen des Wagens verbunden ist. Das Ende des ersten Schenkels ist drehbar mit der Lenkstange 10a verbunden, das Ende des zweiten Schenkels ist drehbar mit einer ersten Lenkschubstange 12 verbunden.

Weiterhin umfaßt die Vorderradlenkeinheit 1a einen Zwischenhebel 13, dessen eines Ende ebenfalls fest um eine vertikale Achse drehbar mit dem Rahmen des Wagens verbunden ist und dessen anderes Ende drehbar mit einer zweiten Lenkschubstange 14 verbunden ist. Wie insbesondere aus Figur 5 ersichtlich, sind die erste Lenkschubstange 12 und die zweite Lenkschubstange jeweils um eine vertikale Achse 14 drehbar mit einer Spurstange 15 verbunden.

Das andere Ende der Lenkschubstange 12 ist mit einem ersten Radlenkhebel 16 drehbar verbunden. Das andere Ende des ersten Radlenkhebels 16 ist mit einem ersten, um eine vertikale Achse drehbar an dem Wagen befestigten Rad 18 verbunden. Auf gleiche Weise ist das andere Ende der zweiten Lenkschubstange 14 mit einem Radlenkhebel 17 drehbar verbunden. Das andere Ende des zweiten Radlenkhebels 17 ist entsprechend mit einem zweiten, um eine vertikale Achse drehbar an dem Wagen befestigten Rad 19 angeordnet.

Im folgenden wird erläutert, wie durch eine Auslenkung D des magnetisch mit einer Leitschiene 50 gekoppelten Magnetkopfs 2 eine Lenkung L der vier Räder 18, 19, 36 und 37 bewirkt wird.

Hierzu wird angenommen, daß die Leitschiene in Fahrtrichtung eine Krümmung nach links aufweist. Da der Magnetkopf 2 magnetisch an die Leitschiene gekoppelt ist, folgt der Magnetkopf dieser Linkskrümmung der Leitschiene und bewirkt dadurch eine Auslenkung des Auslegers 20 nach links bzw. in der Darstellung in Figur 5 nach unten. Im folgenden werden die Auslenkungen der einzelnen Komponenten in bezug auf Figur 5 angegeben.

Dadurch, daß die Koppelstangen 29a und 29b fest mit der Welle 33 verbunden sind, bewirkt die Auslenkung des Auslegers 20 nach unten eine Auslenkung der ersten Koppelstange 29a nach links und der zweiten Koppelstange 29b nach rechts. Demgemäß wird die erste Lenkstange 10a ebenfalls nach links und die zweite Lenkschubstange 10b nach rechts bewegt, wie durch die Pfeile in Figur 5 angedeutet.

Dadurch, daß der Lenkstockhebel 11 fest um eine vertikale Achse drehbar mit dem Wagen verbunden ist, führt die Linksbewegung der Lenkstange 10a zu einer Bewegung des zweiten Schenkels 11b des Lenkstockhebels 11 nach oben. Gleiches gilt für den Lenkstockhebel der Hinterradlenkeinheit.

Durch die Bewegung des zweiten Schenkels 11 b des Lenkstockhebels 11 nach oben wird die erste Lenkschubstange 12 ebenfalls nach oben bewegt. Weiterhin wird über die Spurstange 15, die ebenfalls nach oben bewegt wird, die zweite Lenkschubstange 14 nach oben bewegt. Gleiches gilt für die beiden Lenkschubstangen der Hinterradlenkeinheit.

Durch die Bewegung der Lenkschubstangen 12 und 14 nach oben werden die beiden Radlenkhebel 16 und 19 ebenfalls nach oben bewegt, wodurch die beiden Räder 18 und 19 in bezug auf ihre vertikale Drehachse nach links ausgelenkt werden.

Auf ähnliche Weise ergibt sich eine Auslenkung der Räder 36 und 37 in bezug auf ihre vertikale Drehachse nach rechts.

Durch geeignete Bemessung der einzelnen Komponenten der Vorderradlenkeinheit 1a und der Hinterradlenkeinheit 1b kann somit eine direkte Lenkung des Wagens in Abhängigkeit von der Auslenkung des Auslegers 20, die ihrerseits durch die magnetische Kopplung des Magnetkopfs 2 an die Leitschiene 50 bedingt ist, realisiert werden.

Dadurch, daß sowohl die Vorderräder als auch die Hinterräder lenkbar sind, kann durch die dargestellte Ausführungsform ein sehr kleiner Kurvenradius realisiert werden.

Bei einem erfindungsgemäßen Wagen mit einer Spurbreite von 750 mm und einem Radstand von 1000 mm, haben sich folgende Abmessungen für die einzelnen Komponenten als günstig erwiesen:
Ausleger 20: 375 mm
erste Koppelstange 29a, zweite Koppelstange 29b: 86 mm
erste Lenkstange 10a: 292 mm
zweite Lenkstange 10b: 954 mm
erster Schenkel 11 a des Lenkstockhebels 11: 170 mm
zweiter Schenkel 11 b des Lenkstockhebels 11: 130 mm
Winkel zwischen erstem Schenkel 11 a und zweitem Schenkel 11 b des Lenkstockhebels 11: 97°
erste Lenkschubstange 12, zweite Lenkschubstange 14: 199 mm
Spurstange 15: 234 mm
erster Radlenkhebel 16, zweiter Radlenkhebel 17: 100mm
erster Schenkel des Lenkstockhebels der Hinterradlenkeinrichtung: 166 mm
Winkel zwischen erstem Schenkel und zweitem Schenkel des Lenkstockhebels der Hinterradlenkeinrichtung: 82°
(Die Abmessungen der einzelnen Komponenten sind hierbei jeweils von Drehpunkt zu Drehpunkt angegeben.)

Neben der in den Figuren 3 bis 5 dargestellten Ausführungsform sind eine Vielzahl von Abwandlungen möglich.

Beispielsweise können, im Gegensatz zu Figur 3, die Lenkstangen für die Vorderradlenkeinheit und die Hinterradlenkeinheit in einer Ebene verlaufen. In diesem Fall ist es möglich, die Koppelstange einstückig auszubilden. Weiterhin kann auf die Vorderradlenkeinheit oder die Hinterradlenkeinheit verzichtet werden. Die in diesem Fall realisierten Kurvenradien sind zwar größer als in der Ausführungsform mit zwei Lenkeinheiten, der Wagen erlaubt dann allerdings auch Aufbauten, bei denen kein Platz für eine zweite Lenkeinheit zur Verfügung steht.

Außerdem kann der Magnetkopf direkt an der Welle 33 angebracht werden, d.h. es kann von einem Ausleger 20 abgesehen werden. In diesem Fall entfällt die durch den Ausleger 20 verursachte Hebelwirkung, so daß bei gleicher Ausbildung des Wagens eine größere Kopplungskraft zur Lenkung erforderlich ist. Eine derartige Ausführungsform läßt sich beispielsweise einsetzen, wenn nur geringe Lasten transportiert werden sollen.

Darüber hinaus ist die in Figur 5 dargestellte Lenkung nur beispielhaft zu verstehen. Es können selbstverständlich auch andere Lenkmechanismen, bei denen eine Auslenkung eines Magnetkopfs zu einer entsprechenden direkten Lenkung führt, je nach Anwendungsgebiet, eingesetzt werden.

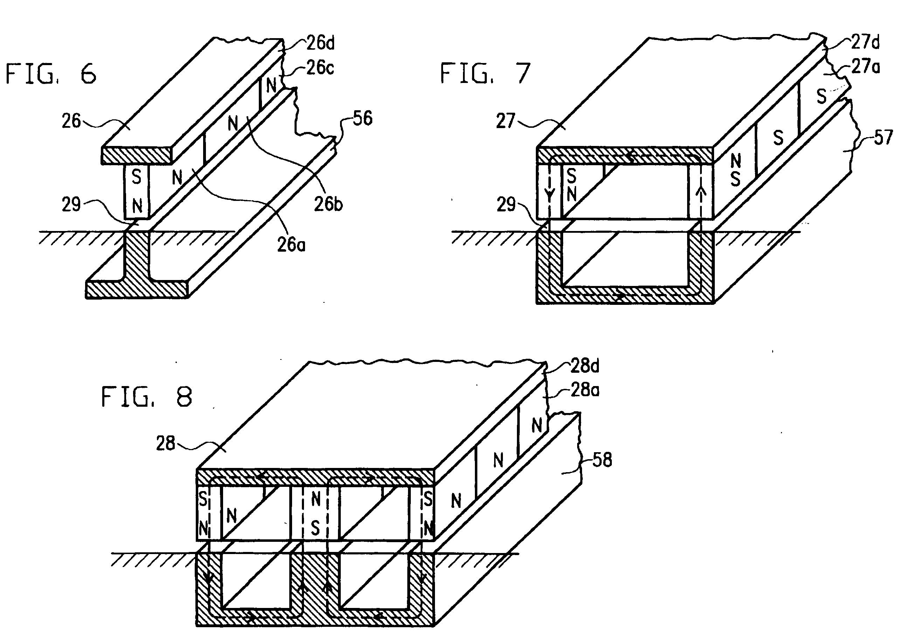

In Figur 6 ist eine Ansicht eines Magnetkopfs 26 und einer Leitschiene 50 einer weiteren Ausführungsform eines Systems gemäß der vorliegenden Erfindung dargestellt.

Im Gegensatz zu den bereits dargestellten Magnetköpfen, wird bei dem Magnetkopf 26 der konstante Abstand zur Leitschiene 50 durch eine Einrichtung zur Erzeugung eines Luftkissens 29 gewährleistet.

Der Magnetkopf besteht aus mehreren Stabmagneten 26a, 26b und 26c, die auf einer Polplatte 26d angebracht sind. Wie aus Figur 6 ersichtlich, sind die Nordpole der Magneten 26a, 26b und 26c in Richtung zur Leitschiene 56 vorgesehen. Die Polplatte 26d dient einerseits zur Befestigung der Magneten 26a, 26b und 26c und andererseits zur Verstärkung des Magnetfelds. Die Anzahl der verwendeten Magneten bestimmt sich hierbei nach der erwünschten Kopplungsstärke zwischen Magnetkopf und Leitschiene.

Die Leitschiene 56 ist in Form eines T-förmigen Reaktionseisens, vorzugsweise eines Weicheisens, vorgesehen. Wie aus Figur 6 ersichtlich, ist dieses Eisen bündig im Boden eingelassen. Hierdurch werden zum einen eine Verschmutzung und damit etwaige Betriebsunterbrechungen vermieden. Zum anderen kann auch eine Verletzungsgefahr durch hervorstehende Schienen vermieden werden.

Die Breite der Magneten 26a, 26b und 26c sowie die Breite des Schenkels des Rückschlußeisens 56 entsprechen einander. Insbesondere sind diese Breiten so schmal wie möglich zu halten, damit eine möglichst starke Kopplung zwischen den Magneten und dem Reaktionseisen gewährleistet ist.

Der dargestellte Magnetkopf ist vorzugsweise um eine vertikale Achse drehbar vorzugsweise am Fahrzeug oder am Ausleger befestigt, so daß er insbesondere einer kurvenförmigen Leitschiene nachfolgen kann, so daß immer eine maximale Kopplung zwischen Magnetkopf und Leitschiene gewährleistet ist.

In Figur 7 ist eine Schrägansicht eines Magnetkopfs 27 und einer Leitschiene 57 einer weiteren Ausführungsform eines Systems gemäß der vorliegenden Erfindung dargestellt.

Die in Figur 7 gezeigte Ausführungsform unterscheidet sich von der in Figur 6 dargestellten Form dadurch, daß sowohl der Magnetkopf als auch die Leitschiene U-förmig ausgebildet sind. Wie in Figur 7 dargestellt, kann durch die U-förmige Ausbildung ein höherer Magnetfluß und damit eine stärkere Kopplung erzielt werden.

Im übrigen gelten die bereits im Zusammenhang mit Figur 6 gemachten Ausführungen.

Figur 8 ist eine Schrägansicht eines Magnetkopfs 28 und einer Leitschiene 58 einer anderen Ausführungsform eines Systems gemäß der vorliegenden Erfindung. Sowohl der Magnetkopf 28 als auch das Reaktionseisen 58 sind hierbei W-förmig ausgebildet. Hierdurch kann eine gegenüber der in Figur 7 dargestellten Ausführungsform erhöhte magnetische Kopplung erzielt werden.

Im übrigen gelten die gleichen Ausführungen, wie sie bereits im Zusammenhang mit den Figuren 6 und 7 gemacht worden sind.

Obwohl die vorteilhaften Anordnungen der Magnete im Zusammenhang mit Luftkissenmagnetköpfen beschrieben worden sind, lassen sich diese Anordnungen auch bei allen anderen in dieser Beschreibung dargestellten Magnetköpfen einsetzen.

Neben den in den Figuren 6 bis 8 dargestellten Ausführungsformen sind eine Vielzahl von Abwandlungen möglich.

So können beispielsweise bei den Magnetköpfen anstelle der Permanentmagneten auch Elektromagneten verwendet werden. Dadurch wird zwar der Aufbau des Magnetkopfs komplizierter, andererseits führt ein Elektromagnet zu einer verbesserten Handhabbarkeit der Wagen. Durch Ausschalten des Elektromagneten kann der Wagen beispielsweise unabhängig von der Leitschiene bewegt werden. Dies ist insbesondere vorteilhaft, wenn der Wagen über eine Weiche in einem Leitschienensystem fahren soll oder ganz aus dem Leitschienensystem genommen werden soll.

Weiterhin können auch die Leitschienen in Form von Magneten, beispielsweise Permanentmagneten oder Elektromagneten vorgesehen werden. Hierdurch kann eine besonders starke magnetische Kopplung des Magnetkopfs an die Leitschiene verwirklicht werden. Diese Weiterbildung eignet sich demnach insbesondere, wenn hohe Lenkkräfte, beispielsweise aufgrund eines sehr hohen Ladegewichts erforderlich sind. Ein Elektromagnet erleichtert eine Steuerung der Wagen des Systems. Beispielsweise können durch Ein- und Ausschalten verschiedene Weichenstellungen in einem Leitschienensystem realisiert werden.

Die in den Figuren 6 bis 8 dargestellten Polungen sind ebenfalls nur beispielhaft zu verstehen. Es ist selbstverständlich möglich, auch andere Polungen einzusetzen.

Gemäß einer weiteren Ausführungsform, die nicht in den Figuren dargestellt ist, umfaßt der Magnetkopf einen Sensor, der beim Betrieb des Wagens fortwährend den Abstand des Magnetkopfs von der Leitschiene feststellt. Aufgrund dieser Abstandsmessungen wird der Magnetkopf durch ein Stelleinrichtung, beispielsweise in Form eines Motor, so nachgeführt, daß er immer einen konstanten Abstand zur Leitschiene aufweist.

Auch diese Ausführung kann zusammen mit der Vielzahl der oben beschriebenen vorteilhaften Weiterbildungen eingesetzt werden.

Die oben beschriebenen Ausführungsformen umfassen insbesondere eine Vielzahl von vorteilhaften Ausführungen verschiedener Art. Diese vorteilhaften Weiterbildung lassen sich in beliebiger Form miteinander kombinieren.

## Patentansprüche

1. Ein selbstfahrender Wagen mit
einer Lenkeinrichtung (1a, 1b), und
einem Magnetkopf (2), der um eine vertikal durch den Wagen verlaufende Achse (A) drehbar gelagert ist, und der zur magnetischen Kopplung an eine Leitschiene zur Führung des selbstfahrenden Wagens ausgebildet ist, derart daß der Magnetkopf bei Betrieb des selbstfahrenden Wagens der Leitschiene folgt,
**dadurch gekennzeichnet,**
daß der Magnetkopf (2) in im wesentlichen vertikaler Richtung bewegbar an dem selbstfahrenden Wagen angeordnet ist, und
daß der Magnetkopf eine Einrichtung aufweist, die den Magnetkopf (2) bei Betrieb des selbstfahrenden Wagens in konstantem Abstand zur Leitschiene hält.

2. Der Wagen nach Anspruch 1, in welchem der Magnetkopf (2) um eine vertikale Achse drehbar an einem ersten Ende eines Auslegers (20) vorgesehen ist, und das andere Ende des Auslegers drehbar um die vertikale Achse (A) gelagert ist und mechanisch mit der Lenkeinrichtung (1a, 1b)gekoppelt ist.

3. Der Wagen nach Anspruch 1 oder 2, in welchem die Einrichtung in Form wenigstens eines um eine senkrecht zur Längsrichtung des Magnetkopfs (2) verlaufende Achse (AA) drehbar gelagerten Rads (90) oder einer um eine senkrecht zur Längsrichtung des Magnetkopfs verlaufende Achse drehbar gelagerten Walze ausgebildet ist.

4. Der Wagen nach Anspruch 3, in welchem die Einrichtung in Form von zwei Rädem (40) vorgesehen ist.

5. Der Wagen nach Anspruch 3 oder 4 in Verbindung mit Anspruch 2, in welchem die senkrecht zur Längsrichtung des Magnetkopfs verlaufende Achse (BA) in Fahrtrichtung hinter der vertikalen Drehachse (AA) des Magnetkopfs vorgesehen ist.

6. Der Wagen nach Anspruch 1 oder 2, in welchem die Einrichtung zur Ausbildung eines Luftkissens zwischen dem Magnetkopf und der Leitschiene ausgebildet ist.

7. Der Wagen nach Anspruch 1 oder 2, in welchem die Einrichtung eine Sensoreinrichtung zum wiederholten Messen des Abstandes zwischen Magnetkopf und Leitschiene aufweist, und eine Stelleinrichtung aufweist, die den Magnetkopf auf Basis der Messungen in konstantem Abstand zur Leitschiene hält.

8. Der Wagen nach einem der Ansprüche 1 bis 7, in welchem der drehbar gelagerte Magnetkopf mit der Lenkeinrichtung mechanisch gekoppelt ist (3), so daß eine durch eine Leitschiene hervorgerufene Drehung (D) des Magnetkopfs um die vertikale Achse eine dem Verlauf der Leitschiene entsprechende Steuerung (L) der Lenkeinrichtung bewirkt.

9. Der Wagen nach einem der Ansprüche 1 bis 8, in welchem die Lenkeinrichtung eine Vorderradlenkeinheit (1a) und/oder eine Hinterradlenkeinheit (1b) aufweist, und der drehbar gelagerte Magnetkopf (2) mit der Vorderradlenkeinheit und/oder der Hinterradlenkeinheit mechanisch gekoppelt ist.

10. Der Wagen nach Anspruch 9, in welchem die Vorderradlenkeinheit (1a) und/oder die Hinterradlenkeinheit (1b) durch jeweils eine Lenkstange (10a, 10b) mit dem drehbar gelagerten Magnetkopf (2) gekoppelt ist.

11. Der Wagen nach Anspruch 10, in welchem die Lenkstange (10a) für die Vorderradlenkeinheit und die Lenkstange für Hinterradlenkeinheit (10b) mittels einer Koppelstange (29a, 29b) mit dem drehbar gelagerten Magnetkopf (2) mechanisch verbunden sind.

12. Der Wagen nach einem der Ansprüche 8 bis 11, in welcher jede Lenkeinheit umfaßt:
einen zweischenkligen Lenkstockhebel (11), der drehbar mit dem Wagen verbunden ist, wobei das Ende des einen Schenkels (11a) drehbar mit dem Lenkhebel (10a, 10b) verbunden ist,
eine erste Lenkschubstange (12), deren eines Ende mit dem Ende des anderen Schenkels (11b) des Lenkstockhebels (11) drehbar verbunden ist,
einen Zwischenhebel (13), dessen eines Ende drehbar mit dem Wagen verbunden ist,
eine zweite Lenkschubstange (14), deren eines Ende mit dem Zwischenhebel (13) drehbar verbunden ist,
einen Spurstange (15), deren eines Ende drehbar mit dem einen Ende der ersten Lenkschubstange (12) und deren anderes Ende drehbar mit dem einen Ende der zweiten Lenkschubstange (14) verbunden ist,
einen ersten Radlenkhebel (16), dessen eines Ende mit dem anderen Ende der ersten Lenkschubstange (12) drehbar verbunden ist und dessen anderes Ende mit einem ersten um eine vertikale Achse drehbar an dem Wagen befestigtem Rad (18) zur Drehung desselben um diese Achse vorgesehen ist,
einen zweiten Radlenkhebel (17), dessen eines Ende mit dem anderen Ende der zweiten Lenkschubstange (14) drehbar verbunden ist und dessen anderes Ende mit einem zweiten um eine vertikale Achse drehbar an dem Wagen befestigtem Rad (19) zur Drehung desselben um diese Achse vorgesehen ist.

13. System umfassend:
wenigstens einen selbstfahrenden Wagen nach einem der vorangegangenen Ansprüche, und
eine Leitschiene zur Führung des selbstfahrenden Wagens, wobei
der Wagen im Betrieb mit der Leitschiene magnetisch so gekoppelt ist, daß eine durch die Leitschiene verursachte Drehung des Magnetkopfs um die vertikale Achse eine der Leitlinie entsprechende Steuerung der Lenkeinrichtung bewirkt.
